# EUROPEAN PATENT SPECIFICATION

(11) **EP 4 111 645 B1**
(45) Date of publication and mention of the grant of the patent: **27.08.2025**
(21) Application number: 20715315.6
(22) Date of filing: 25.03.2020
(51) Int. Cl.: H04L 41/069, H04L 43/04, H04L 43/106

(54) **INTEGRATED CIRCUIT FOR NETWORK DATA PROCESSING, NETWORK DATA LOGGING AND A NETWORK DIGITAL TWIN**
INTEGRIERTE SCHALTUNG ZUR NETZWERKDATENVERARBEITUNG, NETZWERKDATENPROTOKOLLIERUNG UND DIGITALER NETZWERKZWILLING
CIRCUIT INTÉGRÉ POUR LE TRAITEMENT DE DONNÉES DE RÉSEAU, ENREGISTREMENT DE DONNÉES DE RÉSEAU ET JUMEAU NUMÉRIQUE DE RÉSEAU

(43) Date of publication of application: 04.01.2023
(73) Proprietor: Huawei Technologies Co., Ltd., Shenzhen, Guangdong 518129, (CN)
(72) Inventor: FANG, Liming, 80992 Munich (DE); FONS LLUIS, Francisco, 80992 Munich (DE)
(74) Representative: Roth, Sebastian
(86) International application number: PCT/EP2020/058389
(87) International publication number: WO 2021/190746

(56) References cited:
- EP-A1- 2 809 033
- WO-A1-2016/049336
- US-A1- 2012 106 960
- US-A1- 2014 173 154
- US-A1- 2016 065 423

## Description

### TECHNICAL FIELD

The present disclosure relates to the field of networking systems and network data logging. In particular, an integrated circuit is provided, which comprises a first processor for conventional network data processing and a coprocessor, which is separate from the first processor, for network data logging. Further, a system is provided which comprises the integrated circuit and a simulation device, wherein the simulation device implements digital twin technology for processing logging network information obtained from the integrated circuit.

### BACKGROUND

Presently, the task of developing and configuring a network system is a great challenge, especially when complex network applications are part of the network system. A main reason is the lack of sufficient visibility and observability of properties of the network system (for example due to the lack of suitable logging of network information) in early design and modeling phases, but also in posterior verification and validation phases. This causes trouble to maintenance and growth of such networking systems. Therefore, the lack of said visibility keeps present along the whole life cycle of the network system.

Taking the automotive industry as an example, a current trend is that network systems become a core part of a vehicle, bringing features like modularity, scalability and configurability into the backbone of the vehicle. A growth of network systems however is not only present in automotive or transportation, but across all industries. Often, these network systems are implemented by electronic control units (ECUs) or integrated hardware. As a result, simulation of network systems for any kinds of use cases becomes an important aspect of the design and modeling phase.

In order to develop a precise dynamic model, which is able to accurately simulate a physical system (e.g. the network system in a vehicle), the simulation or model needs to have access to sufficient data (e.g. data obtained by logging network information). Typically, the lack of such data is a main barrier of implementing a dynamic model. This problem is not limited to automotive use cases and generally applies to simulation of all kinds of network systems.

A conventional solution for logging network information required for simulation and modeling is using standalone and expensive test and measurement equipment (e.g. a data logger, a digital oscilloscope, or the like) to monitor a network system under test. However, these conventional solutions involve the following drawbacks: lack of miniaturization, lack of a customizability and flexibility, lack of memory space or computation performance for real-time analysis. That is, in the prior art there is the lack of a solution for logging network information with little dimensions, high performance, and which can be flexibly integrated into other devices.

EP 2 809 033 A1 relates to packet capture in a network.

US 2012/106960 Aldiscloses a reliable load-balanced multi-photonic star configuration.

### SUMMARY

In view of the above-mentioned problem, embodiments of the present invention aim to improve the conventional solutions for logging network information.

The object is achieved by the invention as defined in the enclosed independent claims. Advantageous implementations of embodiments of the invention are further defined in the dependent claims.

A first aspect of the present invention provides an integrated circuit for network data processing and network data logging, wherein the integrated circuit comprises a first processor configured to process multiple network packets obtained from one or more input ports of the integrated circuit and to forward the multiple network packets towards one or more output ports of the integrated circuit, and a coprocessor separate from the first processor, configured to obtain duplicates of the multiple network packets from the first processor and/or from the integrated circuit, and to aggregate logging network information based on the duplicates of the multiple network packets, wherein the logging network information comprises information about the multiple network packets, wherein the duplicates relate to multiple input ports of the integrated circuit, and the coprocessor is configured to arrange the duplicates in a chronological and/or a serial order, to aggregate the logging network information.

This is beneficial, as a conventional network processing device (e.g. a switch, a router, or the like) is extended with embedded coprocessing capabilities, which can be used for
aggregation the logging network information exclusively. **In** particular, this is achieved by providing and integrated circuit with a processor for network processing, and a separate processor for logging network information. **In** doing so, a sufficient level of visibility of network information is obtained and core features like high performance, flexible integration into other device, and a small form factor are realized.

This is also beneficial, as compaction and miniaturization aspects are addressed by providing the solution for logging network information in a single integrated circuit.

By means of making data that flow through the network system accessible, it is possible to develop virtual models/simulations or digital twins of complex physical systems, which becomes more and more important in many real use cases in the industry. The implementation of digital twins can not only be related to any functionality or application distributed across several entities or devices interconnected through a communication network, but also can be related to the own functionality of the network itself, i.e. a network digital twin understood as the simulation model of the communication network along with its operating environment and the application traffic that it carries, modeling the features of performance of the physical networking device (e.g. a bridge, switch, or router).

According to certain embodiments, the integrated circuit may be a system on a chip (SoC).

According to certain embodiments, a duplicate of a network packet may be any information representing the network packet and its content.

According to certain embodiments, the first processor may be implemented by a first processing core. In particular, the coprocessor is implemented by a separate processing core. According to certain embodiments, a power of the coprocessor and a power of the first processor may be equal. According to certain embodiments, a power of the coprocessor may be different from a power of the first processor. For example, a power of the coprocessor is smaller or greater than a power of the first processor.

According to certain embodiments, the first processor may be a main processor, a primary processor, or a central processing unit.

According to certain embodiments, the first processor may be configured for at least one of: network data switching, network data routing, network data bridging, network data forwarding.

According to certain embodiments, the logging network information may be aggregated based on the content of each of the duplicates of network packets.

According to certain embodiments, the duplicates obtained by the coprocessor may be duplicates of network packets obtained by the first processor. In other words, the first processor can receive network packets as a part of network traffic that is received by the integrated circuit. The first processor makes duplicates of the received network packets and forwards the duplicates to the coprocessor for network data logging. Alternatively, the duplicates are made directly by the coprocessor based on single or multiple network packets received by the first processor and/or by the integrated circuit. To this end, the first processor can provide information about each network packet to the coprocessor. In any of such two cases, afterwards, conventional network switching (including forwarding, routing, or bridging) is applied to the network packets originally received by the first processor.

According to certain embodiments, the coprocessor may be a computer processor used to supplement the functions of the first processor.

According to certain embodiments, the coprocessor may be configured to implement network data logging on a hardware level.

According to certain embodiments, the logging network information may comprise information about each of the single or multiple network packets.

According to certain embodiments, the network packet and/or the duplicate may be a packet on a data link layer (e.g. OSI layer 2). The network packet and/or the duplicate can alternatively be a packet of one of: a network layer (e.g. OSI layer 3), a transport layer (e.g. OSI layer 4), a session layer (e.g. OSI layer 5), a presentation layer (e.g. OSI layer 6), an application layer (e.g. OSI layer 7).

According to certain embodiments, the network packet and/or the duplicate may be an ethernet frame, or a message in a controller area network (CAN) bus, or a message in local interconnect network (LIN) bus, or a message in FlexRay bus, or a message in Peripheral Component Interconnect Express (PCIe) bus.

This is beneficial, as a separate processor can be provided to the first processor. The coprocessor can exclusively use its computing power for network data logging, thereby making network data logging more effective and efficient. The coprocessor in particular ensures network data logging in real-time and on the fly. More specifically, the power of the primary processor (e.g. network switching or routing) is not affected by the coprocessor. This is further beneficial as the first processor and the coprocessor can be provided as one single unit, i.e. as one integrated circuit.

In an implementation form of the first aspect, the coprocessor is configured to exclusively implement network data logging.

This is beneficial as the processing power of one coprocessor can be exclusively used for network data logging. The coprocessor e.g. can implement network data logging function in hardware.

In a further implementation form of the first aspect, the coprocessor is configured to add a timestamp to each duplicate in the duplicates, to aggregate the logging network information.

This ensures that a network traffic scenario, which was logged by the integrated circuit, can be reconstructed, e.g. during a test or simulation, guaranteeing time-invariant features.

In a further implementation form of the first aspect, the coprocessor is configured to compress each duplicate in the duplicates, to aggregate the logging network information.

This ensures that logging network information can be stored in an efficient manner. This helps to safe storage capacity when storing the logging network information, or bandwidth when providing the logging network information to an external device by means of a network connection.

According to certain embodiments, the coprocessor may be further configured to reshape a frame format of each duplicate in the duplicates, to aggregate the logging network information. Reshaping the frame format is e.g. implemented by a predefined protocol.

**In** a further implementation form of the first aspect, the coprocessor is configured to encrypt each duplicate in the duplicates, to aggregate the logging network information. This ensures security of the logging network information in both internal data storage and external data transfer scenarios.

In a further implementation form of the first aspect, the coprocessor is configured to configure a header and/or a trailer of each duplicate in the duplicates, to aggregate the logging network information.

According to certain embodiments, the trailer of each duplicate in the duplicates may be used to aggregate data packet redundancy information for reliability and integrity check of the respective duplicate.

This allows for pre-processing of the duplicates of the network packets which form the logging network information. Thus, the logging network information can be post-processed more efficiently.

According to certain embodiments, the chronological and/or the serial order is obtained based on the timestamps added to the duplicates.

According to certain embodiments, the duplicates may be arranged in the chronological and/or serial order based on a timestamp in each duplicate of a packet. The timestamp may be e.g. obtained as described above. In particular, the plural of duplicate, reading "duplicates" means greater or equal to two.

This ensures that the integrated circuit can be used when information from multiple input ports has to be processed. In particular, an input port is an ingress port.

In a further implementation form of the first aspect, the integrated circuit comprises a memory, wherein the coprocessor is configured to provide the logging network information to the memory.

This is beneficial, as the integrated circuit can also provide the logging network information to a memory, if no other entity for receiving the logging network information is present.

In a further implementation form of the first aspect, the memory comprises a volatile memory for queueing and/or buffering the logging network information and/or a non-volatile memory for storing the logging network information.

This is beneficial as the integrated circuit can queue and/or buffer the logging network information, e.g. if an external device for receiving the logging network information is temporarily not available, e.g. due to an overload. This is beneficial as the integrated circuit can store the logging network information, e.g. if the logging network information is to be analyzed later, e.g. in a laboratory environment. In particular, the integrated circuit comprises the volatile memory and the non-volatile memory. This ensures that the integrated circuit can implement a queue and/or buffer as well as a storage.

In a further implementation form of the first aspect, the coprocessor is configured to provide the logging network information to an external entity.

According to certain embodiments, the coprocessor may be configured to read the logging network information from the memory to provide it to the external entity. According to certain embodiments, the coprocessor may be configured to provide the logging network information to the external entity directly after aggregating it. That is, the logging network information can be provided directly after it is obtained, on the fly and/or can be stored in the volatile and/or non-volatile memory and provided to the external entity from the volatile and/or non-volatile memory. According to certain embodiments, the logging network information may be provided to the external entity by means of one or more monitoring ports of the integrated circuit. According to certain embodiments, the logging network information may be provided to an external entity through one or more output ports of the integrated circuit.

In a further implementation form of the first aspect, the coprocessor and/or the processor is further configured to create and/or inject a new network packet to the one or more output ports, wherein the coprocessor is further configured to aggregate the logging network information also based on the new network packet.

According to certain embodiments, the new network packet and/or its format may be configurable by the user. In particular, this new data injection task performed by the coprocessor or the processor is optional/configurable by the user.

This is beneficial, as with this new network packet injection feature activated/enabled, the integrated circuit is no more a passive agent in a network but an active agent, able to modify the whole network activity with new network packets.

A second aspect of the present invention provides a method for network data processing and network data logging, wherein the method comprises the steps of processing, by a first processor of an integrated circuit, multiple network packets obtained from one or more input ports of the integrated circuit, and forwarding, by the first processor, the multiple packets towards one or more output ports of the integrated circuit, obtaining, by a coprocessor of the integrated circuit, duplicates of the multiple network packets from the first processor and/or from the integrated circuit, wherein the coprocessor is separate from the first processor, and aggregating, by the coprocessor, logging network information based on the duplicates of the multiple network packets, wherein the logging network information comprises information about the multiple network packets, wherein the duplicates relate to multiple input ports of the integrated circuit, and the method further includes arranging, by the coprocessor, the duplicates in a serial order corresponding to the input ports, to aggregate the logging network information.

In an implementation form of the second aspect, the method further includes exclusively implementing network data logging by the coprocessor.

In a further implementation form of the second aspect, the method further includes adding, by the coprocessor, a timestamp to each duplicate in the duplicates, to aggregate the logging network information.

In a further implementation form of the second aspect, the method further includes compressing, by the coprocessor, each duplicate in the duplicates, to aggregate the logging network information.

In a further implementation form of the second aspect, the method further includes encrypting, by the coprocessor, each duplicate in the duplicates, to aggregate the logging network information.

In a further implementation form of the second aspect, the method further includes configuring, by the coprocessor, a header of each duplicate in the duplicates, to aggregate the logging network information and a trailer of each duplicate in the duplicates to aggregate data packet redundancy information for reliability and integrity check of such resultant duplicate data packet with aggregated logging network information.

In a further implementation form of the second aspect, the integrated circuit comprises a memory, wherein the method further includes providing, by the coprocessor, the logging network information to the memory.

In a further implementation form of the second aspect, the memory comprises a volatile memory for queuing or buffering the logging network information and/or a non-volatile memory for storing the logging network information.

In a further implementation form of the second aspect, the method further includes providing, by the coprocessor, the logging network information to an external entity.

In a further implementation form of the second aspect, the method further includes creating and/or injecting, by the coprocessor and/or processor, a new network packet to the one or more output ports, and aggregating, by the coprocessor, the logging network information also based on the new network packet.

The second aspect and its implementation forms include the same advantages as the first aspect and its respective implementation forms.

A third aspect of the present invention provides a computer program product comprising instructions which, when the program is executed by a computer, cause the computer to carry out the steps of the method of the second aspects or any of its implementation forms.

The third aspect and its implementation forms include the same advantages as the second aspect and its respective implementation forms.

A fifth aspect of the present invention provides a system comprising the integrated circuit according to the first aspect or any of its implementation forms, and a simulation device, wherein the integrated circuit is configured to provide the logging network information to the simulation device, and wherein the simulation device implements digital twin technology for processing the logging network information.

This ensures that with digital twin technology, a mathematical model that fully describes the dynamic behavior of a real physical system, can be applied to the logging network information.

The fifth aspect and its implementation forms include the same advantages as the first aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present invention will be explained in the following description of specific embodiments in relation to the enclosed drawings, in which
- FIG. 1: shows a schematic view of an integrated circuit according to an embodiment of the present invention.
- FIG. 2: shows a schematic view of an integrated circuit according to an embodiment of the present invention in more detail.
- FIG. 3: shows a schematic view of an operating scenario of the present invention.
- FIG. 4: shows a schematic view of an integrated circuit according to the present invention.
- FIG. 5: shows another schematic view of an integrated circuit according to the present invention.
- FIG. 6: shows another schematic view of an integrated circuit according to the present invention.
- FIG. 7: shows a schematic view of method according to an embodiment of the present invention.
- FIG. 8: shows a schematic view of a system according to an embodiment of the present invention.
- FIG. 9: shows a schematic view of a method according to an embodiment of the present invention.

### DETAILED DESCRIPTION OF EMBODIMENTS

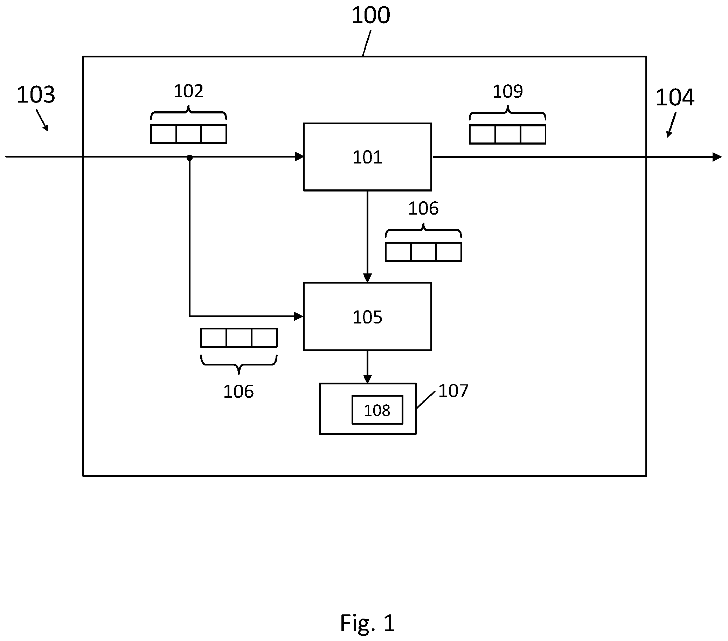

FIG. 1 shows a schematic view of an integrated circuit 100 according to an embodiment of the present invention. The integrated circuit 100 is for network data processing and network data logging, and comprises two separate processors, a first processor 101 and a coprocessor 105. The integrated circuit 100 can for example be an ECU or a system on a chip (SoC). For example, the first processor 101 is implemented by a first processing core and the coprocessor 105 is implemented by a separate processing core.

The first processor 101 is configured to process multiple network packets 102 obtained from one or more input ports 103 of the integrated circuit 100 and to forward the multiple network packets 109 towards one or more output ports 104 of the integrated circuit 100. The multiple network packets 109 are the multiple network packets 102 which optionally have been processed and/or amended by the first processor 101. In other words, the first processor 101 implements conventional network processing (e.g. as done in a switch, a router, a bridge, or the like). Although there is only one input port 103 shown in FIG. 1, there can be an arbitrary number of input ports 103 of the integrated circuit 100. Although there is only one output port 104 shown in FIG. 1, there can be an arbitrary number of output ports 104 of the integrated circuit 100.

To extend the conventional network processing (which is implemented by the first processor 101), the coprocessor 105 is separate from the first processor 101 and is configured to obtain duplicates 106 of the multiple network packets 102 from the first processor 101 and/or from the integrated circuit 100.

The first processor 101 can either forward the selected duplicates 106 to the coprocessor 105 or the coprocessor 105 obtains the duplicates 106 by itself, e.g. running in a parallel data path of the integrated circuit 100 (without interfering the behavior of the first processor 101).

The coprocessor 105 is further configured to aggregate logging network information 107 based on the duplicates 106 of the multiple network packets 102, wherein the logging network information 107 comprises information 108 about the multiple network packets 102. That is, by means of aggregating, information about each of the network packets 102 is stored in a single piece of information (i.e. the logging network information).

Both the first processor 101 and the coprocessor 105 are integrated in the same electronic chip. In other words, an on-chip data logging function is embedded into a network switching chip (or a routing chip or a bridging chip). A network switching function and a logging function are seamlessly interconnected in order to improve performance of logging network information.

Both the switching function and the logging function can be configurable by a user, that is, the user can define what kind of network packets 102, 109 can be switched from one input port 103 to an output port 104. For the logging function, the user can define what kind of network packets 102 can be captured to be logged. This can be managed by configurable parameters of the integrated circuit 100.

To meet real-time constraints and performance requirements, the coprocessor 105 can execute the logging functionality directly in hardware (e.g. by a custom processing core synthesized in logic cells and exploiting parallelism and pipeline) instead of software (e.g. a sequence of instructions executed on a processor).

The integrated circuit 100 optionally can process network packets 102 at layer 2 of the OSI model or above (layer 3 to layer 7). The network packets 102 can be ethernet frames being forwarded through different ports of an ethernet switch or a router, or other messages, such as in a CAN bus or a LIN bus in a vehicle.

The integrated circuit 100 optionally can be a standardized hardware solution, which can be used in SoC devices across many network applications fields (e.g. automotive, smart manufacturing, information technology, aerospace, military, or health equipment).

The first processor 101 and/or the coprocessor 105 optionally can implement an open and standardized software architecture for automotive ECUs, e.g. for definition of software components, libraries or application programming interfaces.

In other words, the integrated circuit 100 allows to aggregate logging network information 107 (e.g. logging reports) in order to evaluate the status and functional behavior of a network system. Moreover, by using this logging network information 107 as an input stimulus to a digital functional twin of the networking system, it is possible to perform verification, validation, and predictive maintenance of the network system.

Optionally, the coprocessor 105 is configured to exclusively implement network data logging, so as to clearly separate the network logging function from the conventional network processing in the first processor 101.

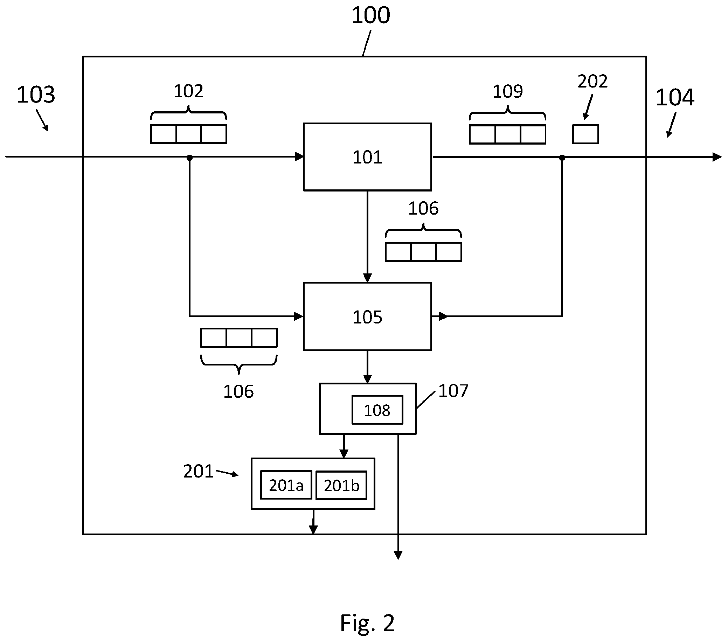

FIG. 2 shows a schematic view of an integrated circuit 100 according to an embodiment of the present invention in more detail. The integrated circuit 100 shown in FIG. 2 comprises all features and functionality of the integrated circuit 100 of FIG. 1, as well as the following optional features:
As illustrated in FIG. 2, the integrated circuit 100 can also comprise a memory 201 and the coprocessor 105 can provide the logging network information 107 to the memory 201. The memory 201 e.g. can comprise a volatile memory 201a for queueing or buffering the logging network information 107 and/or a non-volatile memory 201b for storing the logging network information 107. The logging network information 107 can then be provided to an external entity from the memory 201. Moreover, in general, the memory can be onchip or off-chip, and in-system or external to the system itself, for instance a hard drive memory or a pen drive pluggable to the system or integrated circuit 100.

However, the logging network information 107 can also be sent to an external device (outside the integrated circuit 100) directly, following predefined traffic shaping, scheduling and adapting rules. Thus, a transmission speed according to the demands of the receiver or to the status of the network (e.g. to reduce the transfer rate if the receiver or network is overloaded, in order to not have packets drop) can be achieved.

In any of the above cases, the external entity optionally can undo/unpack the logging network information 107 in order to obtain the original network packets 102 captured by the integrated circuit 100. In this way, the logging procedure is transparent, and the external entity can synthesize a digital twin free of interference.

As it is also illustrated in FIG. 2 the coprocessor 105 and or the processor 101 optionally can be configured to create and/or inject a new network packet 202 to the one or more output ports 104, and the coprocessor 105 can be configured to aggregate the logging network information 107 also based on the new network packet 202.

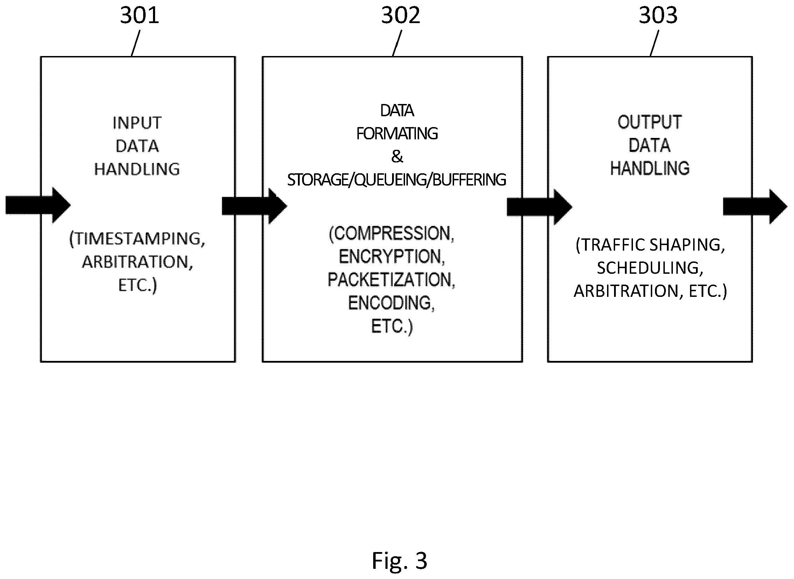

FIG. 3 shows a schematic view of an operating scenario of the integrated circuit 100. As it is now going to be described in view of FIG. 3, the functionality of the integrated circuit 100 can be grouped into three blocks 301, 302, 303.

The first block 301 relates to handling network packets 102, 106 that reach the integrated circuit 100, respectively their duplicates in real-time and on the fly. For example, the coprocessor 105 optionally can be configured to add a timestamp to each duplicate 106 in the duplicates 106, to aggregate the logging network information 107.

The second block 302 relates to formatting duplicates 106 of the packets 102 according to a set of rules and either storing/queueing/buffering them in memory or directly forwarding them to one or more logging ports.

For example, the coprocessor 105 optionally can be configured to compress each duplicate 106 in the duplicates 106, to aggregate the logging network information 107.

The compression can be configured by a user of the integrated circuit 100. This includes optional reshaping of the frame format of the duplicate 106 according to a predefined protocol.

According to another example, the coprocessor 105 optionally can be configured to encrypt each duplicate 106 in the duplicates 106, to aggregate the logging network information 107. The encryption can be configured by a user of the integrated circuit 100.

According to another example, the coprocessor 105 optionally can be configured to configure a header and/or a trailer of each duplicate 106 in the duplicates 106, to aggregate the logging network information 107. The trailer of each duplicate 106 in the duplicates 106 can be used to aggregate data packet redundancy information for reliability and integrity check of such resulting duplicates.

In particular, into the header of each duplicate 106, it is put all kind of information that is relevant for interpreting the duplicate 106 or the corresponding network packet 102. All information put into the header is configurable according to a set of system parameters that a user can configure previously in a setup process of the integrated circuit 100.

According to another example, the coprocessor 105 optionally can be configured to apply packetization to each duplicate 106 in the duplicates 106, to aggregate the logging network information 107.

Packetization refers to information related to one or more duplicate 106 being formatted, shaped or stored following a pre-defined format. For instance, two frames can be grouped in one if both have the same source and destination addresses. These aspects are configurable by a user in a setup process.

The third block 303 relates to output data handling, e.g. to which output port 104 a network packet 109 is to be provided, or that the new packet 202 can be created and injected to the output ports 104.

The functionality defined in blocks 301, 302 and 303 is implemented on a hardware level in the integrated circuit 100 by the first processor 101 and/or the coprocessor 105, resulting in a high level of performance, e.g. by exploitation of parallelism and pipelining design techniques. Allocating network data processing to the first processor 101 and network data logging to the coprocessor 105 also ensures that normal operation or the quality of service (QoS) of the integrated circuit 100 is not affected by aggregating the logging information 107.

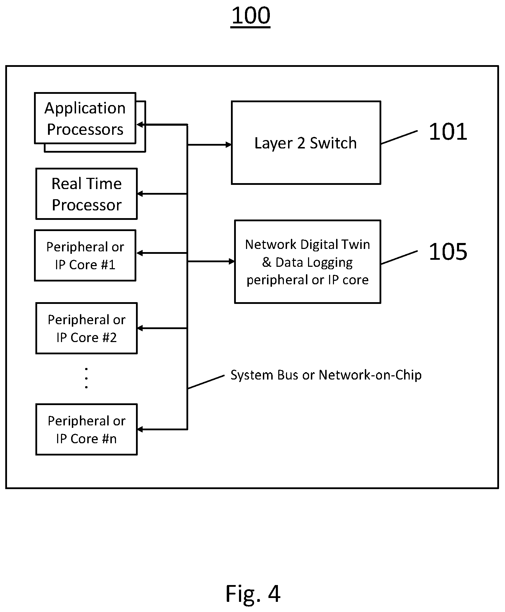

FIG. 4 shows a schematic view of the integrated circuit 100 according to the present invention, being realized for example as an automotive in-vehicle networking chip. As it is illustrated in FIG. 4, the integrated circuit 100 employs a system bus / Network-On-Chip which is accessible by both the first processor 101 and the coprocessor 105.

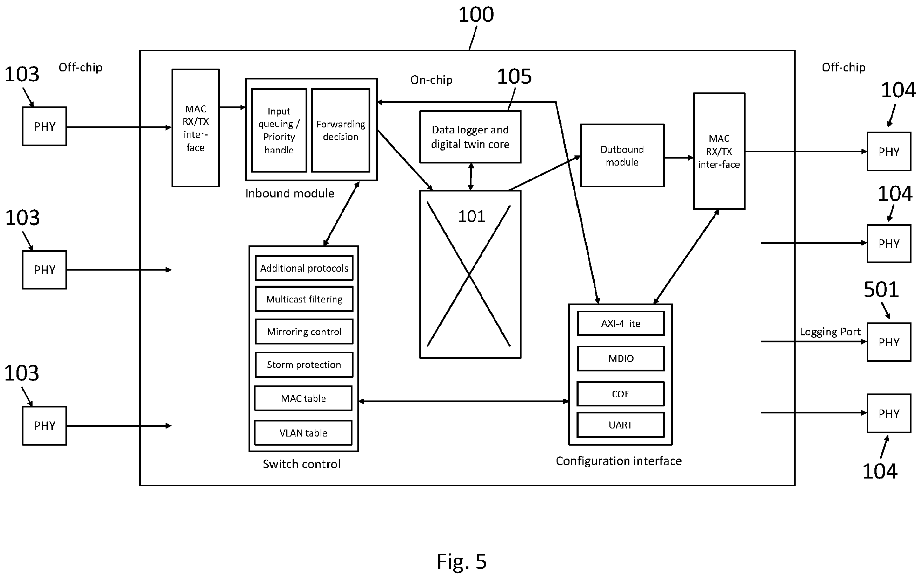

FIG. 5 shows another schematic view of an integrated circuit 100 according to the present invention. More specifically, FIG. 5 shows a multiport ethernet local area network (LAN) switch (also called "LSW") which employs the integrated circuit 100 and is e.g. composed of several ports and e.g. operates ethernet frames at Layer 2 (but optionally also any other network packets 102 mentioned herein).

In the integrated circuit shown in FIG. 5, the coprocessor 105 is illustrated as a dedicated peripheral or IP (Intellectual Property) core (labelled "Data Logger and Digital Twin Core") inside the LSW. This IP core is responsible for capturing, at real-time, at least one network packet 102 that flows between at least one ingress port (input ports 103 labelled "PHY" on the left side of FIG. 5) and at least one egress port (output ports 104 labelled "PHY" on the right side of FIG. 5) of the LSW, formatting (e.g. packetization, compression, wire-speed encryption) and storing them in a storage unit (e.g. the memory 201), e.g. DDR4 memory, and finally transferring them outside, e.g. through a dedicated logging port 501, which e.g. follows specific traffic shaping rules which can be configured by a user.

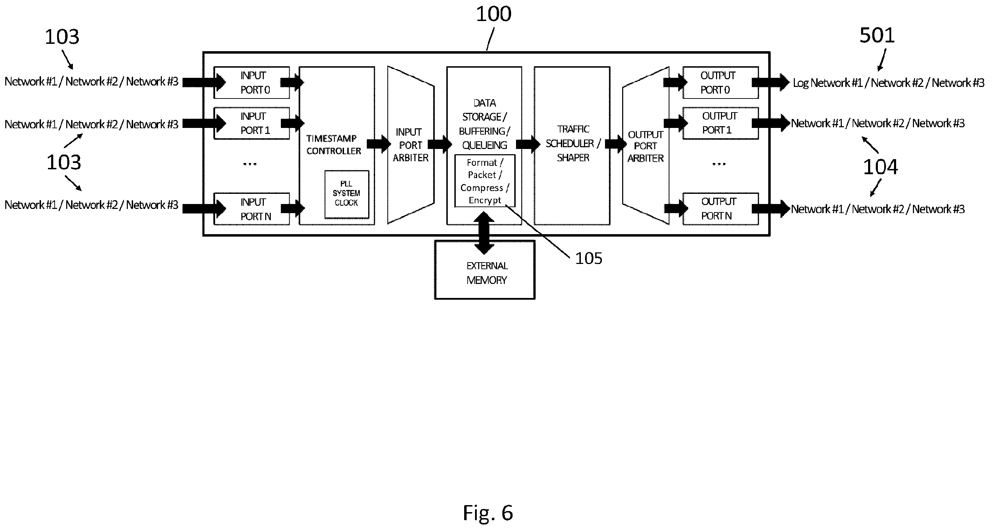

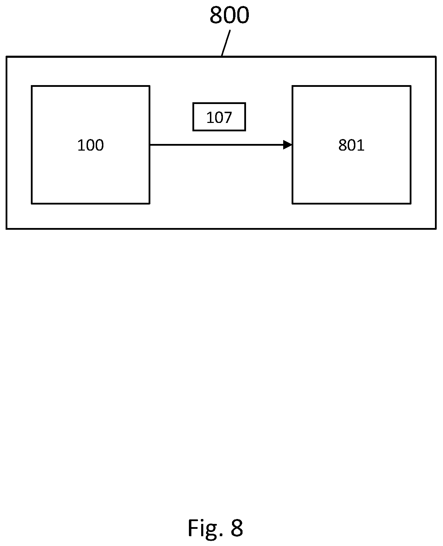

FIG. 6 shows another schematic view of an integrated circuit 100 according to the present invention. To increase performance of the logging process (e.g. to establish a low latency data path, or data storage space optimization), optionally, the duplicates 106 of the network packets 102 can be temporarily stored and can be furthermore packetized, compressed and/or encrypted on the fly, before writing them as logging network information 107 to the memory 201, and can be depacketized, decompressed and decrypted afterwards when reading the logging network information 107 back from the memory 201 or even later when the logging network packet 109 reaches an external simulation or digital twin device 801 as it is going to be described below in view of FIG. 8.

To this end, the integrated circuit 100 can perform the following optional steps:
1. Network packets 102 arrive at the input ports 103 of the integrated circuit 100. Duplicates 106 of the network packets 102 are obtained either by the first processor 101, the coprocessor 105 or the integrated circuit 100.
2. The duplicates 106 are immediately timestamped in order to mark and/or track them in real-time and are queued according to the respective input ports 103 through on-chip input buffers/FIFO memories.
3. An optional ingress port arbiter of the integrated circuit 100 is responsible for multiplexing the duplicates 106 corresponding to the N input ports 103 according to predefined priority rules, e.g. converting the data flow from parallel to serial. In other words, the duplicates 106 relate to multiple input ports 103 of the integrated circuit 100 and the coprocessor 105 arranges the duplicates 106 in a serial order, e.g. corresponding to the chronological order of arrival of the network packets in the input ports 103.
4. The serialized incoming duplicates 106 get formatted (e.g. compression, encryption, addition/edition of its header information, etc.) before being stored in a memory 201 or being forwarded to an external entity (as aggregated logging network information 107). In FIG. 6, an external memory is illustrated outside the integrated circuit 100. However, there can also be a memory 201 inside the integrated circuit 100, having the same functionality.
5. By means of steps 1 to 4, the network logging information 107 is aggregated based on the duplicates 106 of the network packets 102.
6. An optional scheduler in the integrated circuit 100 takes charge of moving the network packets 102 or the duplicates 106 to a next stage in the data path when necessary, optionally based on predefined traffic shaping rules.
7. The aggregated network logging information 107 e.g. is provided to a specific egress logging port (e.g. port 501) and sent to the outside of the switch. This guarantees a sufficient level of quality-of-service (thereby complying with time performance factors like latency or jitter).

It is important to note that all these steps are performed without affecting the normal behavior of the network data processing (i.e. the conventional operation of a switch or router).

In the following, three exemplary use cases are going to be described in which the integrated circuit 100 can be employed:
Data Logger function: By means of the network data logging function provided by the integrated circuit 100 it is possible to have visibility of network packets 102 that flow through the different input ports 103 and output ports 104 of the switch. That is, every electronic system equipped with the integrated circuit provides a superior level of visibility and observability of network traffic to develop network applications on top of it. The fact that the integrated circuit 100 is equipped with such technology allows network engineers to visualize the communication in a user-friendly environment at any time.

Digital Twin function: Developing products with switching chipsets that employ the integrated circuit 100 enable the possibility to virtualize the functionality of said product through a digital twin as the integrated circuit 100 can log network packets 102 that flow through its input ports 103 (e.g. ingress ports) and output ports 104 (e.g. egress ports) in real-time. The network data logging and digital twin function provide the foundation on which the virtualization and digital model of any product or function can be built (for example the simulation of networks systems, e.g. in vehicles).

Event Data Recording function: In a similar way to the mandatory presence of black boxes (i.e. flight data recorders) in airplanes, it is planned to obligate the installation of such an information recording systems also in automatic driving vehicles, e.g. for autonomous driving levels 3 to 5, to help determine responsibility in the event of an accident. All kind of vehicles (including trucks, buses, vans, utility vehicles, boats, drones, helicopters, planes) can be equipped with an Event Data Recorder that employs the integrated circuit 100.

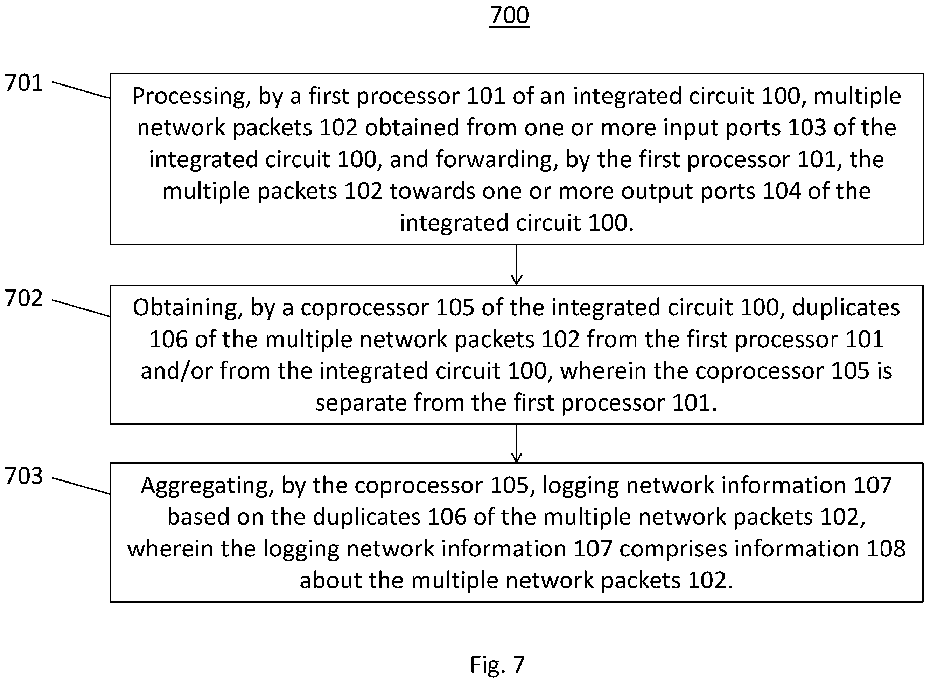

FIG. 7 shows a schematic view of method 700 according to an embodiment of the present invention. The method 700 is for network data processing and network data logging and therefore comprises a first step of processing 701, by a first processor 101 of an integrated circuit 100, multiple network packets 102 obtained from one or more input ports 103 of the integrated circuit 100, and forwarding, by the first processor 101, the multiple packets 102 towards one or more output ports 104 of the integrated circuit 100.

The method 700 comprises a second step of obtaining 702, by a coprocessor 105 of the integrated circuit 100, duplicates 106 of the multiple network packets 102 from the first processor 101 and/or from the integrated circuit 100, wherein the coprocessor 105 is separate from the first processor 101.

The method 700 comprises a third step of aggregating 703, by the coprocessor 105, logging network information 107 based on the duplicates 106 of the multiple network packets 102, wherein the logging network information 107 comprises information 108 about the multiple network packets 102.

FIG. 8 shows a schematic view of a system 800 according to an embodiment of the present invention. The system 800 is for simulation a network system, in particular by means of digital twin technology. The system 800 therefore comprises the integrated circuit 100 according as it was described in any of the above embodiments and a simulation device 801. To allow for simulation of a network system, the integrated circuit 100 is configured to provide the logging network information 107 to the simulation device 801. The simulation device 801 in tum is configured to implement digital twin technology for processing the logging network information 107.

By means of the digital twin technology which processes the logging network information 107, a simulation device or computer can emulate and predict the behavior of an integrated circuit 100 itself or of a network system in real-time. Such an implementation may also be called network digital twin. Apart from the network digital twin, an application oriented digital twin can be provided on top, based on the information transferred in the network packets 102 that are logged. For instance, to simulate the behavior of a battery (state-of-charge, state-of-health) in a vehicle, based on data related to temperature, voltage and current provided in the logged data frames.

Moreover, the system 800 can be able to undo or unpack the logging network information 107 in order to extract and recover the original network packets 102. For instance, in case of implementing a digital twin, the digital twin makes use of the same network packets 102 that were processed at real-time in the integrated circuit. They are totally free of interference, and through the timestamp field attached to the header of each network packet 102, they provide real-time information relating to this network packet 102.

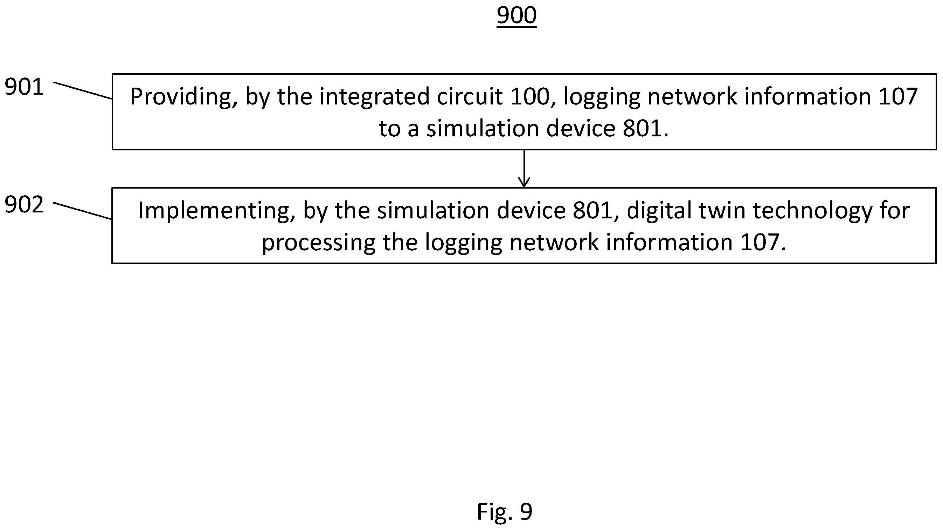

FIG. 9 shows a schematic view of a method according to an embodiment of the present invention. The method 900 comprises a first step of providing 901, by the integrated circuit 100 as described in view of any of the above figures, logging network information 107 to a simulation device 801.

The method 900 comprises a second step of implementing 902, by the simulation device 801, digital twin technology for processing the logging network information 107.

According to certain embodiments, in order for the simulation device 801 and/or the digital twin to make use of the network packets 102, the aggregation steps (which can be also called formatting steps) done by the coprocessor 105 can be reverted to obtain the network packets 102 from the logging network information 107 (e.g. by undoing the formatting, and/or by decompression, and/or by decryption, and/or by removing timestamps of the logging network information 107 to recover the original network packets 102). Once this preprocessing step is performed to obtain the original data, then it is possible to run the simulation or the digital twin.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. The present invention is solely defined in the appended independent claims. Advantageous features are set out in the appended dependent claims.

## Claims

1. An integrated circuit (100) for network data processing and network data logging, wherein the integrated circuit (100) comprises:
- a first processor (101) configured to process multiple network packets (102) obtained from one or more input ports (103) of the integrated circuit (100) and to forward the multiple network packets (102) towards one or more output ports (104) of the integrated circuit (100), and
- a coprocessor (105) separate from the first processor (101), configured to obtain duplicates (106) of the multiple network packets (102) from the first processor (101) and/or from the integrated circuit (100), and to aggregate logging network information (107) based on the duplicates (106) of the multiple network packets (102), wherein the logging network information (107) comprises information (108) about the multiple network packets (102),
wherein the duplicates (106) relate to multiple input ports (103) of the integrated circuit (100), and wherein the coprocessor (105) is further configured to arrange the duplicates in a chronological and/or a serial order, to aggregate the logging network information (107).

2. The integrated circuit (100) according to claim 1, wherein the coprocessor (105) is configured to exclusively implement network data logging.

3. The integrated circuit (100) according to claim 1 or 2, wherein the coprocessor (105) is further configured to add a timestamp to each duplicate (106) in the duplicates (106), to aggregate the logging network information (107).

4. The integrated circuit (100) according to any one of the preceding claims, wherein the coprocessor (105) is further configured to compress each duplicate (106) in the duplicates (106), to aggregate the logging network information (107).

5. The integrated circuit (100) according to any one of the preceding claims, wherein the coprocessor (105) is further configured to encrypt each duplicate (106) in the duplicates (106), to aggregate the logging network information (107).

6. The integrated circuit (100) according to any one of the preceding claims, wherein the coprocessor (105) is further configured to configure a header and/or a trailer of each duplicate (106) in the duplicates (106), to aggregate the logging network information (107).

7. The integrated circuit (100) according to any one of the preceding claims, further comprising a memory (201), wherein the coprocessor (105) is further configured to provide the logging network information (107) to the memory (201).

8. The integrated circuit (100) according to claim 7, wherein the memory (201) comprises a volatile memory (201a) for queuing and/or buffering the logging network information (107) and/or a non-volatile memory (201b) for storing the logging network information (107).

9. The integrated circuit (100) according to any one of the preceding claims, wherein the coprocessor (105) is configured to provide the logging network information (107) to an external entity.

10. The integrated circuit (100) according to any one of the preceding claims, wherein the coprocessor is further configured to create and/or inject a new network packet to the one or more output ports, and to aggregate the logging network information also based on the new network packet.

11. A method for network data processing and network data logging, wherein the method comprises the steps of:
- processing, by a first processor of an integrated circuit (100), multiple network packets (102) obtained from one or more input ports (103) of the integrated circuit (100), and forwarding, by the first processor (101), the multiple packets (102) towards one or more output ports (104) of the integrated circuit (100),
- obtaining (702), by a coprocessor (105) of the integrated circuit (100), duplicates (106) of the multiple network packets (102) from the first processor (101) and/or from the integrated circuit (100), wherein the coprocessor (105) is separate from the first processor (101), and
- aggregating (703), by the coprocessor (105), logging network information (107) based on the duplicates (106) of the multiple network packets (102), wherein the logging network information (107) comprises information (108) about the multiple network packets (102),
wherein the duplicates relate to multiple input ports of the integrated circuit, and the method further includes arranging, by the coprocessor, the duplicates in a serial order corresponding to the input ports, to aggregate the logging network information.

12. A computer program product comprising instructions which, when the program is executed by a computer, cause the computer to carry out the steps of the method (700) of claim 11.

13. A system (800) comprising the integrated circuit (100) according to any one of claims 1 to 10, and a simulation device (801), wherein the integrated circuit (100) is configured to provide the logging network information (107) to the simulation device (801), and wherein the simulation device (801) implements digital twin technology for processing the logging network information (107).

## Patentansprüche

1. Integrierte Schaltung (100) zur Netzwerkdatenverarbeitung und Netzwerkdatenprotokollierung, wobei die integrierte Schaltung (100) Folgendes umfasst:
- einen ersten Prozessor (101), der dazu konfiguriert ist, mehrere Netzwerkpakete (102) zu verarbeiten, die von einem oder mehreren Eingangsanschlüssen (103) der integrierten Schaltung (100) erlangt werden, und die mehreren Netzwerkpakete (102) zu einem oder mehreren Ausgangsanschlüssen (104) der integrierten Schaltung (100) weiterzuleiten, und
- einen von dem ersten Prozessor (101) getrennten Coprozessor (105), der dazu konfiguriert ist, Duplikate (106) der mehreren Netzwerkpakete (102) von dem ersten Prozessor (101) und/oder von der integrierten Schaltung (100) zu erlangen und basierend auf den Duplikaten (106) der mehreren Netzwerkpakete (102) Protokollierungsnetzwerkinformationen (107) zu aggregieren, wobei die Protokollierungsnetzwerkinformationen (107) Informationen (108) über die mehreren Netzwerkpakete (102) umfassen,
wobei die Duplikate (106) mehrere Eingangsanschlüsse (103) der integrierten Schaltung (100) betreffen, und wobei der Coprozessor (105) ferner dazu konfiguriert ist, die Duplikate in einer chronologischen und/oder seriellen Reihenfolge anzuordnen, um die Protokollierungsnetzwerkinformationen (107) zu aggregieren.

2. Integrierte Schaltung (100) gemäß Anspruch 1, wobei der Coprozessor (105) dazu konfiguriert ist, ausschließlich die Netzwerkdatenprotokollierung zu implementieren.

3. Integrierte Schaltung (100) gemäß Anspruch 1 oder 2, wobei der Coprozessor (105) ferner dazu konfiguriert ist, jedem Duplikat (106) in den Duplikaten (106) einen Zeitstempel hinzuzufügen, um die Protokollierungsnetzwerkinformationen (107) zu aggregieren.

4. Integrierte Schaltung (100) gemäß einem der vorhergehenden Ansprüche, wobei der Coprozessor (105) ferner dazu konfiguriert ist, jedes Duplikat (106) in den Duplikaten (106) zu komprimieren, um die Protokollierungsnetzwerkinformationen (107) zu aggregieren.

5. Integrierte Schaltung (100) gemäß einem der vorhergehenden Ansprüche, wobei der Coprozessor (105) ferner dazu konfiguriert ist, jedes Duplikat (106) in den Duplikaten (106) zu verschlüsseln, um die Protokollierungsnetzwerkinformationen (107) zu aggregieren.

6. Integrierte Schaltung (100) gemäß einem der vorhergehenden Ansprüche, wobei der Coprozessor (105) ferner dazu konfiguriert ist, einen Header und/oder einen Trailer jedes Duplikats (106) in den Duplikaten (106) zu konfigurieren, um die Protokollierungsnetzwerkinformationen (107) zu aggregieren.

7. Integrierte Schaltung (100) gemäß einem der vorhergehenden Ansprüche, ferner umfassend einen Speicher (201), wobei der Coprozessor (105) ferner dazu konfiguriert ist, die Protokollierungsnetzwerkinformationen (107) an den Speicher (201) bereitzustellen.

8. Integrierte Schaltung (100) gemäß Anspruch 7, wobei der Speicher (201) einen flüchtigen Speicher (201a) zum Einreihen und/oder Puffern der Protokollierungsnetzwerkinformationen (107) und/oder einen nichtflüchtigen Speicher (201b) zum Speichern der Protokollierungsnetzwerkinformationen (107) umfasst.

9. Integrierte Schaltung (100) gemäß einem der vorhergehenden Ansprüche, wobei der Coprozessor (105) dazu konfiguriert ist, die Protokollierungsnetzwerkinformationen (107) an eine externe Einheit bereitzustellen.

10. Integrierte Schaltung (100) gemäß einem der vorhergehenden Ansprüche, wobei der Coprozessor ferner dazu konfiguriert ist, ein neues Netzwerkpaket zu erstellen und/oder in den einen oder die mehreren Ausgangsanschlüsse einzuspeisen und die Protokollierungsnetzwerkinformationen ebenfalls basierend auf dem neuen Netzwerkpaket zu aggregieren.

11. Verfahren zur Netzwerkdatenverarbeitung und Netzwerkdatenprotokollierung, wobei das Verfahren die folgenden Schritte umfasst:
- Verarbeiten von mehreren Netzwerkpaketen (102), die von einem oder mehreren Eingangsanschlüssen (103) der integrierten Schaltung (100) erlangt werden, durch einen ersten Prozessor einer integrierten Schaltung (100), und Weiterleiten der mehreren Pakete (102) zu einem oder mehreren Ausgangsanschlüssen (104) der integrierten Schaltung (100) durch den ersten Prozessor (101),
- Erlangen (702) von Duplikaten (106) der mehreren Netzwerkpakete (102) von dem ersten Prozessor (101) und/oder von der integrierten Schaltung (100) durch einen Coprozessor (105) der integrierten Schaltung (100), wobei der Coprozessor (105) von dem ersten Prozessor (101) getrennt ist, und
- Aggregieren (703) von Protokollierungsnetzwerkinformationen (107) durch den Coprozessor (105) basierend auf den Duplikaten (106) der mehreren Netzwerkpakete (102), wobei die Protokollierungsnetzwerkinformationen (107) Informationen (108) über die mehreren Netzwerkpakete (102) umfassen,
wobei die Duplikate mehrere Eingangsanschlüsse der integrierten Schaltung betreffen, und das Verfahren ferner Anordnen der Duplikate durch den Coprozessor in einer seriellen Reihenfolge entsprechend den Eingangsanschlüssen beinhaltet, um die Protokollierungsnetzwerkinformationen zu aggregieren.

12. Computerprogrammprodukt, das Anweisungen umfasst, die, wenn das Programm durch einen Computer ausgeführt wird, den Computer dazu veranlassen, die Schritte das Verfahrens (700) gemäß Anspruch 11 durchzuführen.

13. System (800) umfassend die integrierte Schaltung (100) gemäß einem der Ansprüche 1 bis 10 und eine Simulationsvorrichtung (801), wobei die integrierte Schaltung (100) dazu konfiguriert ist, der Simulationsvorrichtung (801) die Protokollierungsnetzwerkinformationen (107) bereitzustellen, und wobei die Simulationsvorrichtung (801) digitale Zwillingstechnologie zur Verarbeitung der Protokollierungsnetzwerkinformationen (107) implementiert.

## Revendications

1. Circuit intégré (100) pour le traitement de données de réseau et l'enregistrement de données de réseau, dans lequel le circuit intégré (100) comprend :
- un premier processeur (101) configuré pour traiter plusieurs paquets réseau (102) obtenus d'un ou plusieurs ports d'entrée (103) du circuit intégré (100) et pour transférer les multiples paquets réseau (102) vers un ou plusieurs ports de sortie (104) du circuit intégré (100), et
- un coprocesseur (105) distinct du premier processeur (101), configuré pour obtenir des doublons (106) des multiples paquets réseau (102) du premier processeur (101) et/ou du circuit intégré (100), et pour agréger les informations de réseau d'enregistrement (107) sur la base des doublons (106) des multiples paquets réseau (102), dans lequel les informations de réseau d'enregistrement (107) comprennent des informations (108) sur les multiples paquets réseau (102),
dans lequel les doublons (106) se rapportent à plusieurs ports d'entrée (103) du circuit intégré (100), et dans lequel le coprocesseur (105) est également configuré pour ranger les doublons dans un ordre chronologique et/ou sériel, pour agréger les informations de réseau d'enregistrement (107).

2. Circuit intégré (100) selon la revendication 1, dans lequel le coprocesseur (105) est configuré pour mettre en œuvre exclusivement l'enregistrement de données de réseau.

3. Circuit intégré (100) selon la revendication 1 ou 2, dans lequel le coprocesseur (105) est également configuré pour ajouter un horodatage à chaque doublon (106) dans les doublons (106), pour agréger les informations de réseau d'enregistrement (107).

4. Circuit intégré (100) selon l'une quelconque des revendications précédentes, dans lequel le coprocesseur (105) est également configuré pour compresser chaque doublon (106) dans les doublons (106), pour agréger les informations de réseau d'enregistrement (107).

5. Circuit intégré (100) selon l'une quelconque des revendications précédentes, dans lequel le coprocesseur (105) est également configuré pour chiffrer chaque doublon (106) dans les doublons (106), pour agréger les informations de réseau d'enregistrement (107).

6. Circuit intégré (100) selon l'une quelconque des revendications précédentes, dans lequel le coprocesseur (105) est également configuré pour configurer un bloc de début et/ou un bloc de fin à chaque doublon (106) dans les doublons (106), pour agréger les informations de réseau d'enregistrement (107).

7. Circuit intégré (100) selon l'une quelconque des revendications précédentes, comprenant également une mémoire (201), dans lequel le coprocesseur (105) est également configuré pour fournir les informations de réseau d'enregistrement (107) à la mémoire (201).

8. Circuit intégré (100) selon la revendication 7, dans lequel la mémoire (201) comprend une mémoire volatile (201a) pour mettre en file d'attente et/ou mettre en mémoire tampon les informations de réseau d'enregistrement (107) et/ou une mémoire non volatile (201b) pour stocker les informations de réseau d'enregistrement (107).

9. Circuit intégré (100) selon l'une quelconque des revendications précédentes, dans lequel le coprocesseur (105) est configuré pour fournir les informations de réseau d'enregistrement (107) à une entité externe.

10. Circuit intégré (100) selon l'une quelconque des revendications précédentes, dans lequel le coprocesseur est également configuré pour créer et/ou injecter un nouveau paquet réseau dans les un ou plusieurs ports de sortie, et pour agréger les informations de réseau d'enregistrement également sur la base du nouveau paquet réseau.

11. Procédé de traitement de données de réseau et d'enregistrement de données de réseau, dans lequel le procédé comprend les étapes suivantes :
- le traitement, par un premier processeur d'un circuit intégré (100), de multiples paquets réseau (102) obtenus d'un ou plusieurs ports d'entrée (103) du circuit intégré (100), et la transmission, par le premier processeur (101), des multiples paquets (102) vers un ou plusieurs ports de sortie (104) du circuit intégré (100),
- l'obtention (702), par un coprocesseur (105) du circuit intégré (100), de doublons (106) des multiples paquets réseau (102) du premier processeur (101) et/ou du circuit intégré (100), dans lequel le coprocesseur (105) est distinct du premier processeur (101), et
- l'agrégation (703), par le coprocesseur (105), d'informations de réseau d'enregistrement (107) sur la base des doublons (106) des multiples paquets de réseau (102), dans lequel les informations de réseau d'enregistrement (107) comprennent des informations (108) sur les multiples paquets de réseau (102),
dans lequel les doublons se rapportent à plusieurs ports d'entrée du circuit intégré, et le procédé comporte également l'agencement, par le coprocesseur, des doublons dans un ordre sériel correspondant aux ports d'entrée, pour agréger les informations du réseau d'enregistrement.

12. Produit de programme informatique comprenant des instructions qui, lorsque le programme est exécuté par un ordinateur, amènent l'ordinateur à effectuer les étapes du procédé (700) selon la revendication 11.

13. Système (800) comprenant le circuit intégré (100) selon l'une quelconque des revendications 1 à 10, et un dispositif de simulation (801), dans lequel le circuit intégré (100) est configuré pour fournir les informations de réseau d'enregistrement (107) au dispositif de simulation (801), et dans lequel le dispositif de simulation (801) met en œuvre une technologie de jumeau numérique pour traiter les informations de réseau d'enregistrement (107).
